(19) **Europäisches Patentamt
European Patent Office
Office européen des brevets**

(11) **EP 4 445 164 B1**

(12) **EUROPEAN PATENT SPECIFICATION**

(45) Date of publication and mention
of the grant of the patent:
**11.02.2026 Bulletin 2026/07**

(21) Application number: **22834596.3**

(22) Date of filing: **09.12.2022**

(51) International Patent Classification (IPC):
*G01S 7/00* (2006.01)    *G01S 13/50* (2006.01)
*H04L 5/00* (2006.01)    *H04L 27/26* (2006.01)
*G01S 13/931* (2020.01)

(52) Cooperative Patent Classification (CPC):
**G01S 13/50; G01S 7/006; G01S 13/87;
G01S 13/931; H04L 27/2607; H04L 27/261;**
G01S 2013/9316; H04L 5/0007; H04L 27/2675;
H04L 27/2678

(86) International application number:
**PCT/EP2022/085092**

(87) International publication number:
**WO 2023/105013 (15.06.2023 Gazette 2023/24)**

(54) **A METHOD OF PROCESSING WIRELESS COMMUNICATION SIGNALS FOR USE IN RADAR SENSING**

VERFAHREN ZUR VERARBEITUNG VON DRAHTLOSKOMMUNIKATIONSSIGNALEN ZUR VERWENDUNG BEI DER RADARERFASSUNG

PROCÉDÉ DE TRAITEMENT DE SIGNAUX DE COMMUNICATION SANS FIL DESTINÉS À ÊTRE UTILISÉS DANS UNE DÉTECTION RADAR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.12.2021 DE 102021132772
08.03.2022 DE 102022105460**

(43) Date of publication of application:
**16.10.2024 Bulletin 2024/42**

(73) Proprietor: **AUMOVIO Germany GmbH
60488 Frankfurt am Main (DE)**

(72) Inventors:
• **GUAN, Yong Liang
Singapur 639798 (SG)**
• **GONZÁLEZ GONZÁLEZ, David
30175 Hannover (DE)**
• **JAGANNATH, Rakshith
Singapore 639798 (SG)**

(74) Representative: **Aumovio Corporation
AUMOVIO Germany GmbH
Taunusstraße 36
80807 München (DE)**

(56) References cited:
• **LUONG NGUYEN CONG ET AL: "Radio Resource Management in Joint Radar and Communication: A Comprehensive Survey", IEEE COMMUNICATIONS SURVEYS & TUTORIALS, IEEE, USA, vol. 23, no. 2, 1 April 2021 (2021-04-01), pages 780 - 814, XP011855910, DOI: 10.1109/COMST.2021.3070399**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Invention

The invention relates to the field of radar sensing, in particular to radar sensing using wireless communication signals. More specifically, the invention relates to a method of processing signals used for radar sensing, to a computer program product implementing the method, to a computer-readable storage medium storing the computer program product, to a receiver configured to execute the method, to a system including such receiver, and to a vehicle comprising such receiver.

Background

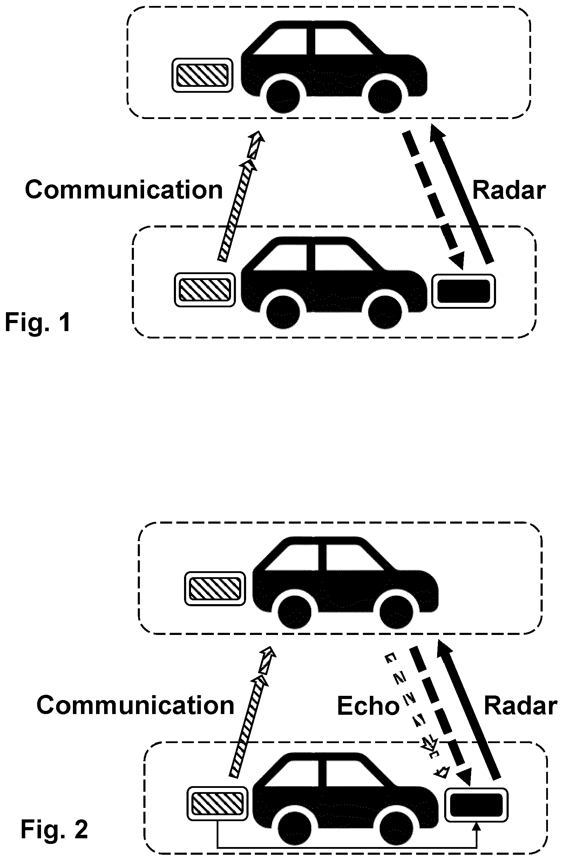

Communication systems at least in some cases use very high frequencies for communicating, inter alia for providing a high communication bandwidth. One example of use of such communication systems is found in transportation systems. Modern and future intelligent transportation systems, also referred by its acronym ITS, include both sensing, e.g., chirp-based radar using a short-pulse frequency-modulated continuous wave (FMCW) signal, and wireless communication systems. These are two separate systems, as shown in figure 1, that may, however, operate in similar radio bands. In the radar sensing paradigm, the radar signal transmitted by the radar sensing system of the vehicle is reflected by surrounding objects. The radar sensing operation then pertains to the determination of the relative range and relative velocities of the different objects in the environment. In the wireless communication paradigm, the communication system of the vehicle transmits the communication signal to the communication receiver of one or more objects within radio range for communication functions. However, the transmitted communication signal is also reflected by surrounding objects, back to the vehicle as a "communication signal echo" as shown in figure 2. Hence, this "communication echo" can also be used for radar sensing purposes. In figures 1 and 2 the solid arrows indicate a transmitted signal, whereas the dashed arrows indicate a reflected signal, or "echo".

LUONG NGUYEN GONG ET AL: "Radio Resource Management in Joint Radar and Communication: A Comprehensive Survey", IEEE COMMUNICATIONS SURVEYS & TUTORIALS, IEEE, USA, vol. 23, no. 2, 1 April 2021 (2021-04-01), pages 780-814, XP011855910, DOI: 10.1109/COMST.2021.3070399, reports a study on joint radar and communication (JRC), which has recently attracted substantial attention for several reasons. The first reason is that JRC allows individual radar and communication systems to share spectrum bands and thus improves the spectrum utilization. The second reason is that JRC enables a single hardware platform, e.g., an autonomous vehicle or a UAV, to simultaneously perform the communication function and the radar function. As a result, JRC is able to improve the efficiency of resources, i.e., spectrum and energy, reduce the system size, and minimize the system cost. However, there are several challenges to be solved for the JRC design. In particular, sharing the spectrum imposes the interference caused by the systems, and sharing the hardware platform and energy resource complicates the design of the JRC transmitter and compromises the performance of each function. To address the challenges, several resource management approaches have been recently proposed, and this paper presents a comprehensive literature review on resource management for JRC. First, fundamental concepts of JRC are presented, important performance metrics used in JRC systems, and applications of the JRC systems. Then, a review and analyze resource management approaches, i.e., spectrum sharing, power allocation, and interference management, for JRC are disclosed. In addition, a presentation of present security issues to JRC and provide a discussion of countermeasures to the security issues is done. Finally, a discussion about important challenges in the JRC design and future research directions related to JRC is presented.

The automotive radar provides crucial safety information for obstacle detection, forward collision warning, and so on. Besides the automotive radar, the vehicle-to-vehicle (V2V) communications also become more and more important for driver assistant systems, especially for automated driving. To this end, the IEEE 802.11p and the IEEE 802.11ad standards have been developed to support efficient V2V communications. As the IEEE 802.11p frequency bandwidth is limited to 75 MHz, the resolution of the radar sensing using IEEE 802.11p-signals cannot reach the accuracy requirement of automotive radars. Moreover, the data rate of IEEE 802.11p cannot satisfy the data rate requirement for self-driving. To improve both the sensing resolution and communication data rate, the IEEE 802.11ad standard has become a promising candidate for the integration of communication and sensing. The bandwidth of IEEE 802.11ad-communication can reach up to 2GHz, which holds the potential for both high communication data rate and high sensing resolution.

Some of these communication systems operate in frequency ranges that are also used by radar sensing apparatuses. It is, therefore, desirable to enable use of such communication systems for radar sensing.

Description

In accordance with a first aspect of the present invention a method is provided that enables the use of communication systems, which use high communication frequencies, for radar sensing.

In accordance with a second aspect of the present invention a receiver is provided, which implements the method according to the first aspect.

In accordance with a third aspect of the present invention a computer program product is provided, which comprises computer instructions that configure a computer system to execute the method in accordance with the first aspect.

In accordance with a fourth aspect a computer readable medium is provided, which stores the computer program product.

In accordance with a fifth aspect of the present invention a system comprising a receiver and a transmitter is provided, which implement the method of the present invention.

In accordance with a sixth aspect of the present invention a vehicle is provided, comprising a receiver and/or a system according to the second and the fifth aspect, respectively.

The various aspects are specified in the independent claims. Further embodiments and developments are provided in the respective dependent claims and the following description.

In accordance with the first aspect, a method of processing wireless communication signals for use in radar sensing, comprises receiving a reflected communication signal (39). The reflected communication signal (39) is a reflection of a previously sent, or transmitted, communication signal (31) comprising a sent preamble part and a sent data payload, reflected off of at least one object (12). The reflected communication signal (39) comprises a corresponding reflected preamble part and a reflected data payload. The method further comprises determining a first radar ambiguity function for the reflected preamble part of the reflected communication signal (39), and determining a second radar ambiguity function for the reflected data payload of the reflected communication signal (39). The method yet further comprises combining the first and the second radar ambiguity functions using a point-wise minimum selection, for obtaining a combined radar ambiguity function. The point-wise minimum selection is also referred to herein as min-point selection.

Determining the radar ambiguity function comprises comparing the received reflected signal with a Doppler-shifted and delayed copy of the preamble part or the data payload, respectively, of the transmitted signal, also referred to herein as reference signal.

The method in accordance with the first aspect of the invention builds on the finding that the deterministic preamble part of a communication frame, in particular of an IEEE 802.11ad frame, is a good candidate for range estimation and multi-target detection for static targets. However, inter alia due to the limited length of the preamble, the range estimate from the preamble part alone is sensitive to non-zero Doppler shifts, caused by a relative movement between the transmitter/receiver and the object reflecting the transmitted signal, and its velocity resolution is limited. While the data payload has a greater length and thus, theoretically, allows for a better range and velocity estimation compared to the preamble part, its reliability varies wildly because the data payload, from the point of view of radar sensing, changes randomly from frame to frame. The combination of the best results from both the preamble part and the data payload provides an improved range and velocity estimation whose reliability never drops below a base reliability provided by the preamble part, and more often than not increases the dynamic range and Doppler resolution of the estimates due to the larger length of the data payload.

In one or more embodiments the wireless communication signal is an OFDM transmission frame having a single-carrier preamble part comprising a short training field (STF) and a channel estimation field (CEF), e.g., as found in transmission frames in accordance with the IEEE 802.11ad standard. The first radar ambiguity function for the reflected preamble part of the reflected communication signal is determined based on both the short training field (STF) and the channel estimation field (CEF) of the single-carrier preamble.

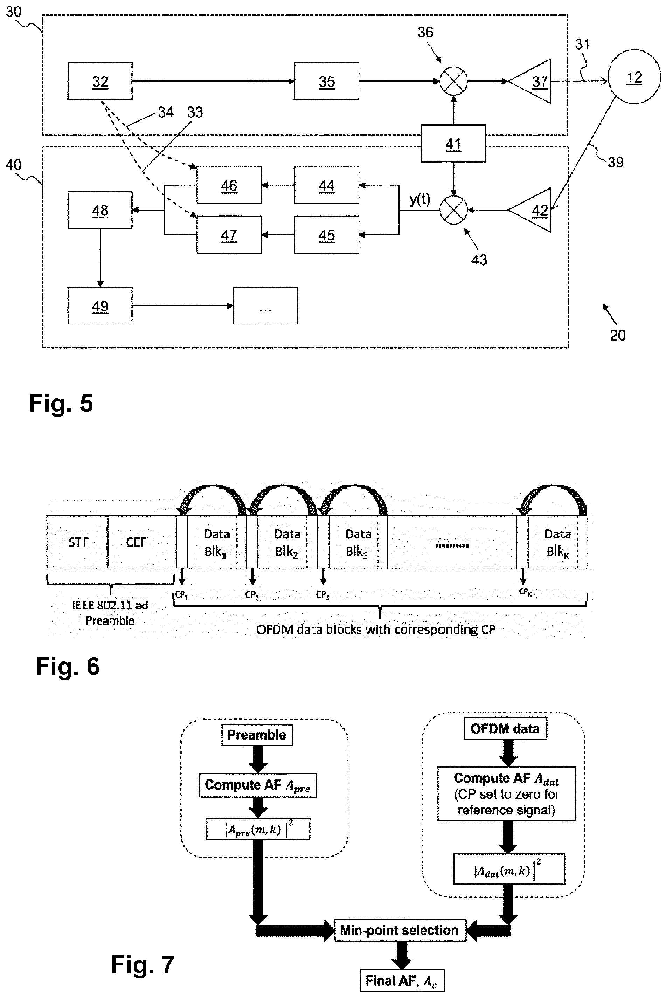

In one or more embodiments the wireless communication signal is a Block-OFDM transmission frame having a plurality of successive OFDM data transmission blocks, each OFDM data transmission block having a cyclic prefix (CP), e.g., as found in transmission frames in accordance with the IEEE 802.11ad standard as shown in figure 6. The cyclic prefix may contain a copy of an end portion of a symbol, the copy being placed at the very beginning of the symbol, preceding it. For determining the second radar ambiguity function for the reflected data payload of the reflected communication signal, the cyclic prefix of the reference signal is set to zero. The cyclic prefix causes significant side-lobe signals at non-zero delay cut. Setting the cyclic prefix of the delayed and Doppler-shifted copy of the sent communication signal to zero attenuates or suppresses the side lobes of the radar ambiguity function for the non-zero delay cut. However, setting the cyclic prefix of the reference signal to zero results in the dominant side lobes in the radar ambiguity function occurring at the zero-delay cut at uniform Doppler spacing, due to the periodicity of the zeroed prefix. This in turn helps attenuating or suppressing the side lobe signals through point-wise minimum selection.

In one or more embodiments the squares of the respective absolute values of the first radar ambiguity function and the second radar ambiguity function are subjected to the point-wise minimum selection, for obtaining the combined radar ambiguity function. The first radar ambiguity function is also be referred to as the preamble AF, $\mathbf{A}_{pre}$ (m, $k$), and the second radar ambiguity function is also referred to as the data AF, $\mathbf{A}_{data}$ (m, $k$). As can be seen by the notation, the points of the radar ambiguity functions form a matrix, in which data points are placed at each of the delay and the Doppler bins.

In one or more embodiments of the method determining the first radar ambiguity function for the reflected preamble part of the reflected communication signal comprises comparing it with the delayed and Doppler-shifted copy of the preamble part of the transmitted communication signal.

In one or more embodiments of the method determining the second radar ambiguity function for the reflected data payload of the reflected communication signal comprises setting the cyclic prefix in a delayed and Doppler-shifted copy of the sent communication signal to zero, prior to comparing it with the reflected data payload of the reflected communication signal.

In one or more embodiments of the method determining the first and/or the second radar ambiguity function comprises applying a matched filter or a bank of correlators.

In one or more embodiments the method further comprises extracting a delay information and/or a velocity information of at least one object from the combined radar ambiguity function.

The method for radar sensing using wireless communication signals uses at least some of the components of a communication system also for radar sensing methods. The radar sensing methods may include capturing a distance to a sensed object, an angle of this object to a predefined axis, a velocity of this object, and/or further attributes of this object.

The method may use a standard communication system, particularly a standard transmitter such as an OFDM transmitter in accordance with IEEE 802.11ad, for sending a communication signal. Communication systems compliant with other standards such as IEEE 802.11a/g, an IEEE 802.11n, an IEEE 802.11ac, an IEEE 802.11ad, an IEEE 802.11p, an IEEE 802.11bd, or proprietary protocols may be used, in particular in case the transmission frames used therein have a preamble part and a data part having cyclic prefixes heading each data block.

A receiver or a receiver part configured for performing the method may comprise novel and/or non-standard parts and/or may use non-standard methods. The communication system may be configured for supporting communication signals within a radar frequency range.

The communication system may receive a reflected communication signal. The reflected communication signal may have been sent by the transmitter part of the communication system. The sent communication signal may have been reflected by one or more objects.

This may be supported by the communication system by providing a broad sending angle. The objects may comprise all kinds of moving, standing and not-moveable objects, for example buildings, vehicles, pedestrians, animals, and/or further objects. The frequency of the sent communication signal may be within a radar frequency range, e.g., a frequency well above 30 MHz; at least some of the communication systems may use frequencies, which may be sent by quite small devices, for example frequencies in ranges between 30 GHz and 300 GHz, particularly between 50 and 150 GHz, for instance between 57 GHz and 71 GHz. The quite small devices of the communication system may be used in a vehicle, for example in a car, a motor cycle, a bus, a truck, a boat or ship, and/or a flying vehicle.

The communication system may use one or more standard and/or proprietary protocol(s), which may be adapted for communicating the communication signal within the radar frequency range. The protocol may comprise a data payload part and a header or preamble part. The data payload part may be bigger or longer than the header or preamble part. The data payload part may comprise information and/or bit-sequences of any kind, i.e., its bit-sequences are not standardized, but may be filled with arbitrary information. In contrast to this, the header or preamble part may comprise or consist of standardized and/or determined information. The "data payload part", as used for this method, may comprise further parts of the protocol, such as cyclic redundancy check (CRC), etc., header parts, training parts, and/or further parts. The object(s) that reflect(s) the sent communication signal may reflect the complete bit-sequence of the sent communication signal; hence, the reflected communication signal - as received by the receiver part - may comprise a reflected data payload part, a reflected header part, a reflected preamble part, and so on, which parts correspond to the corresponding parts the sent communication signal.

The receiver part compares the reflected communication signal with the sent communication signal or with a copy of the sent communication signal. In cases when only the reflected data payload part is considered and/or analysed, the comparing may be limited to this part. To ease this comparing, the receiver part may be co-located to the corresponding transmitter part. The result of the comparing may be called the compared data payload. As an example, the comparing may be achieved by using a matched filter or a bank of correlators. The output of the matched filter (etc.) may, from a mathematical point of view, be identical to a so-called radar ambiguity function; see below for an example.

The compared communication signal may be used as a basis for extracting a delay and/or a velocity information of the at least one object, which had reflected the communication signal. The delay information may also be referred to as "range" or "distance" information, and the velocity information may also be referred to as "Doppler" information.

An advantage of the method presented herein is that it only affects the receiver part of the communication system; the transmitter part may be kept unchanged. Thus, the overall costs for providing both a wireless communication function and a radar sensing function may be reduced significantly. This not only affects the manufacturing of related devices, but also testing, maintenance and further aspects. Moreover, using the data payload for the comparing step, makes this approach highly flexible. Consequently, the method can be based not only on well-known bit-sequences - such as on preambles of some protocols -, but on almost any bit-sequences, for instance the arbitrary bit-sequences of the data payload, even on any part of any communication protocol. This, further, gives room for comparing quite long bit-sequences, i.e., longer bit-sequences than known in at least most of the current protocols. This is particularly advantageous, because, as a rule of thumb, the longer the bit-sequences are, which can be compared, the higher may the resulting signal/noise ratio be, thus providing more precise information on the object(s) the communication signal is reflected from. As an additional advantage, the longer the bit-sequences are, the better the velocity resolution will be.

In various embodiments, the sent communication signal further comprises a sent preamble part and a sent data payload part, and the reflected communication signal comprises a corresponding reflected preamble part and a reflected payload part. The comparing further comprises evaluating the first ambiguity function using the sent preamble part and the reflected preamble part, resulting in a compared preamble part, and further evaluating the second ambiguity function using the reflected data payload and the sent data payload, the cyclic prefix of the sent data payload being set to zero, resulting in a compared data part. The extracting additionally comprises deducing the delay information, i.e., the range information, and the Doppler information, i.e., the velocity information, of the reflecting objects, or targets, from the ambiguity functions. The preamble part, at least of some protocols - for instance the preamble part of IEEE 802.11ad protocol - has special properties, which may improve the quality of the radar sensing operation. These properties may include that the preamble part is (pre-)determined, i.e., it is known to all receiving apparatuses, because it is defined in the protocol's standard. Thus, a strategy of combining these protocol parts, turned out to be highly efficient. For an evaluation of both the data payload part and the preamble part, the evaluation channels or parts of the receiver may be split, e.g., for computing their ambiguity function in time domain.

In various embodiments, the communication signal uses Orthogonal Frequency-Division Multiplexing (OFDM) signal waveforms. As a physical channel, a wireless channel may be used. As a transmitter model, a signal alphabet (encoder) modulation by a pulse shape function may be used. The method and/or the communication system may support multiple-input and multiple-output transmission (MIMO), i.e., a method for multiplying the capacity of a radio link using multiple transmission and receiving antennas, e.g., in form of an antenna array.

In accordance with the second aspect of the present invention a receiver for a joint radar and wireless communication (JRC) is configured for performing a method as described above and/or below. The receiver may comprise an input stage, means for performing an ambiguity function, and/or evaluation means.

The receiver model may comprise a reception of multiple signals, at one or at multiple antennas, matched filtering, range-Doppler (RD) map, and/or decision making, i.e., target detection and source number detection.

In various embodiments, the receiver is co-located to a corresponding transmitter configured for sending a communication signal. Co-located may, for instance, mean that the receiver and the corresponding transmitter are arranged, e.g., in the same housing and/or same chip.

In various embodiments, the receiver comprises a low noise amplifier (LNA), e.g., in its input stage, and/or a mixer configured for building an intermediate frequency, particularly by using the same oscillator signal as the transmitter.

In accordance with the third aspect of the present invention a computer program product comprises instructions which, when executed by a processor and/or a control unit, cause the processor and/or the control unit to carry out the method as described above and/or below.

In accordance with the fourth aspect of the present invention the computer program product may be stored on a computer-readable medium or data carrier. The medium or the data carrier may by physically embodied, e.g., in the form of a hard disk, solid state disk, flash memory device or the like. However, the medium or the data carrier may also comprise a modulated electro-magnetic, electrical, or optical signal that is received by the computer by means of a corresponding receiver, and that is transferred to and stored in a memory of the computer.

In accordance with the fifth aspect of the present invention a communication system comprises a receiver as described above and/or below and a corresponding transmitter configured for sending a communication signal.

In accordance with the sixth aspect of the present invention a vehicle comprises a receiver and/or a communication system as described above and/or below.

A further aspect of the present invention relates to a use of a receiver as described above and/or below or of a method for both wireless communication and for radar sensing as described above and/or below.

In the following section the mathematical concept of the inventive method will be described in greater detail. Throughout this specification, bold upper-case letters "A" denote matrices. For two signals, or functions, x(t) and $y(t)$, $x(t) \star y(t)$ denotes their convolution. For a signal $s(t)$, $s^*(t)$ denotes its conjugate.

It is assumed that the preamble signal is transmitted in single-carrier (SC) modulation format and can be expressed as:

$$u(t) = \sum_{k=0}^{K-1} s_k \text{rect}\left(\frac{t - kT_c}{T_c}\right) \exp\left(j2\pi f_c t\right)$$

(Eq. 1)

where $s_k$, $k = 0, 1, \ldots, K - 1$ is the complex phase code and the rectangular pulse of duration $T_c$ is used as the pulse shaping function. Similarly, the data signal is assumed to be transmitted using OFDM can be expressed as:

$$u(t) = \sum_{k=0}^{K-1} \sum_{l=0}^{L-1} S(kL + l) e^{j2\pi\frac{lt}{T}} \text{rect}\left(\frac{t - kT_o}{T_o}\right) \exp\left(j2\pi f_c t\right)$$

(Eq. 2)

where $k$ represents the $k^{th}$ OFDM block (symbol) and p represents the $p^{th}$ sub-carrier and $T_o = T + T_{cp}$ is the OFDM block duration, including the elementary symbol duration $T$ and the cyclic prefix duration $T_{cp}$.

In various embodiments, the comparing comprises computing an ambiguity function, as an output of comparing the reflected data payload with the sent data payload and/or the reflected preamble part with the sent preamble part. It is assumed that the transmitted signal impinges on P radar targets, also referred to herein as objects or radar objects, which cause it to be reflected back from each of these targets with delay and complex-value attenuation. Hence, the following channel model for the radar processing is assumed:

$$h(t) = \sum_{p=0}^{P-1} \alpha_p \delta\left(t - \tau_p(t)\right)$$

(Eq. 3)

where P is the number of radar objects that reflect the transmitted signal. $\alpha_p$ and $\tau_p$ are the attenuations and delays due to the $p^{th}$ target. The delay $\tau_p$ between the transmitted signal and the received signal is related to the distance and relative velocity of the $p^{th}$ moving object and can be calculated as:

$$\tau_p(t) = 2\frac{d_p + v_p t}{c}$$

(Eq. 4)

where c is the speed of light, $v_p$ is the speed of the $p^{th}$ target, $d_p$ is the range between transmitter and target, and the factor of 2 is due to the round-trip between transmitter, target and receiver.

The received signal is given by the convolution, denoted by an asterisk, of the transmit signal $u(t)$ and the wireless channel $h(t)$ of Eq. 3:

$$r(t) = h(t) \star u(t) = \sum_{p=0}^{P-1} \alpha_p u\left(t - \tau_p(t)\right) + n(t)$$

(Eq. 5)

The received signal may be down-converted to an intermediate frequency or "baseband", thus resulting in a baseband signal $y(t)$ which, for the SC preamble part, can be expressed as:

$$y(t) = r(t)e^{-j2\pi f_c t}$$

$$= \sum_{p=0}^{P-1} \sum_{k=0}^{K-1} \alpha_p s_k \mathrm{rect}\left(\frac{t - \tau_p(t) - kT_c}{T_c}\right) e^{j2\pi f_c(t - \tau_p(t))} + n(t)$$

$$\approx \sum_{p=0}^{P-1} \sum_{k=0}^{K-1} \alpha_p s_k \mathrm{rect}\left(\frac{t - \frac{2d_p}{c} - kT_c}{T_c}\right) e^{j2\pi\left(f_c - \frac{2v_p}{c}\right)t} + n(t)$$

$$(\mathrm{Eq.}\ 6)$$

Similarly, the final base-band signal $y(t)$ for the block-OFDM data payload can be expressed as:

$$y(t) = \sum_{p=0}^{P-1} \sum_{k=0}^{K-1} \sum_{l=0}^{L-1} S(kL + l)e^{j2\pi\frac{l\left(t - \frac{2d_p}{c}\right)}{T}} \mathrm{rect}\left(\frac{t - kT_o - \frac{2d_p}{c}}{T_o}\right) e^{j2\pi\left(f_c - \frac{2v_p}{c}\right)t}$$

$$(\mathrm{Eq.}\ 7)$$

The oscillator signal used for mixing may be the same oscillator signal as used in the transmitter part.

Figure 6 shows the various elements of an IEEE 802.11ad OFDM frame and the locations of the preamble parts as well as the data blocks, each preceded by a cyclic prefix (CP).

The goal of the radar processing is to extract the delay-Doppler information of the radar targets, i.e., the reflecting objects. To this end, in the method in accordance with the first aspect of the invention, the preamble part of the received signal $y(t)$ and the block-OFDM data payload part of $y(t)$ are processed separately, i.e., separate ambiguity functions are determined for the preamble part and the block-OFDM data payload part.

The respective ambiguity functions of the received reflected communication signal may be determined by comparing the received reflected communication signal with a clean delayed and Doppler-shifted copy of the transmit signal for different delays and Doppler shifts. In various embodiments, the comparing comprises using respective 2-D matched filters or banks of correlators. The 2-D matched filtering operation on the received signal results in the a so-called radar ambiguity function $\mathbf{A}(\tau, f)$:

$$\mathbf{A}(\tau, f) = y(\tau) \star \tilde{s}^*(-\tau, f) \qquad (\mathrm{Eq.}\ 8)$$

where the asterisk denotes a convolution, and where $\tilde{s}(\tau, f)$ is the baseband transmit signal delayed by $\tau$ and Doppler shifted by $f$ and is given by:

$$\tilde{s}(\tau, f) = \sum_{k=0}^{K-1} s_k \mathrm{rect}\left(\frac{\tau - kT_c}{T_c}\right) \exp\left(j2\pi f\tau\right)$$

$$(\mathrm{Eq.}\ 9)$$

The output of the 2-D matched filter in Eq. 8, i.e., the radar ambiguity function (AF), is a two-dimensional function of time delay and Doppler frequency. The peaks in the radar ambiguity function $\mathbf{A}(\tau, f)$ occur at the $P$ locations corresponding to the range and velocity $(d_p, v_p)$ of the $P$ targets. Hence, the ambiguity function $\mathbf{A}(\tau, f)$ contains all the information that is required for the extraction of delay and Doppler information of the object, or radar target. The radar ambiguity function measures the distortion of the returned radar signal at the output of the receiver 2-D matched filter from moving targets due their initial delays and the corresponding Doppler shifts. Accordingly, the quality of the ambiguity function determines the quality of the range-velocity estimates.

For a continuous signal $s(t)$ specified in the time domain, its radar ambiguity function $\mathbf{A}_{ss}(\tau, f)$ is given by:

$$\mathbf{A}_{ss}(\tau, f) = \int_{-\infty}^{\infty} s(t)s^*(t - \tau)e^{j2\pi ft}dt \qquad\qquad \text{(Eq. 10)}$$

And, analogously, the radar ambiguity function for a discrete sequence $x(n)$ of length $N$, which represents the samples of a time domain signal, the radar ambiguity function is given by:

$$\mathbf{A}_{xx}(m, k) = \sum_{n=1}^{N-m} x(n)x^*(n + m)e^{j2\pi\frac{kn}{N}}$$

$$\text{(Eq. 11)}$$

As mentioned earlier, Figure 6 shows an exemplary IEEE 802.11ad PHY frame, which may be used in the method according to the first aspect of the present invention. The IEEE 802.11ad frame consists of the preamble that is composed of a short training field (STF) and a channel estimation field (CEF). The preamble is followed by a header field. The STF contains 16 repeated and time-concatenated copies of a Golay code of length-128, followed by another length128 tail-biting Golay sequence. The CEF consists of two length-512 Golay sequences followed by a length-128 tailbiting Golay sequence. The ambiguity function of the IEEE 802.11ad PHY frame single-carrier (SC) preamble sequences of length- $N = N_p$ is obtained by:

$$\mathbf{A}_{pre}(m, k) = \frac{1}{N_p} \sum_{p=1}^{N_p-k} x(p)x_c^*(p + m)e^{j2\pi\frac{pk}{N_p}}$$

$$\text{(Eq. 12)}$$

where $x_c(p)$, $p = 1,2, ..., N_p$ is the clean preamble sequence which is used as the reference preamble signal.
The preamble part of the frame is followed by the block-OFDM data payload. OFDM data of length $N_d$ is transmitted in blocks. For each block, the IEEE 802.11ad standard specifies the number of sub-carriers as $L = 512$. Furthermore, the standard specifies 336 useful sub-carriers, 157 guard sub-carriers, 3 DC sub-carriers and 16 pilot sub-carriers. The cyclic prefix (CP) duration specified by the IEEE 802.11ad standard is ¼ of the OFDM block duration. The ambiguity function of the IEEE 802.11ad PHY random block-OFDM data payload samples (time domain samples), $y(p)$ of length- $N_d$ is given by:

$$\mathbf{A}_{data}(m, k) = \frac{1}{N_d} \sum_{p=1}^{N_d-k} y(p)y_c^*(p + m)e^{j2\pi\frac{pk}{N_d}}$$

$$\text{(Eq.13)}$$

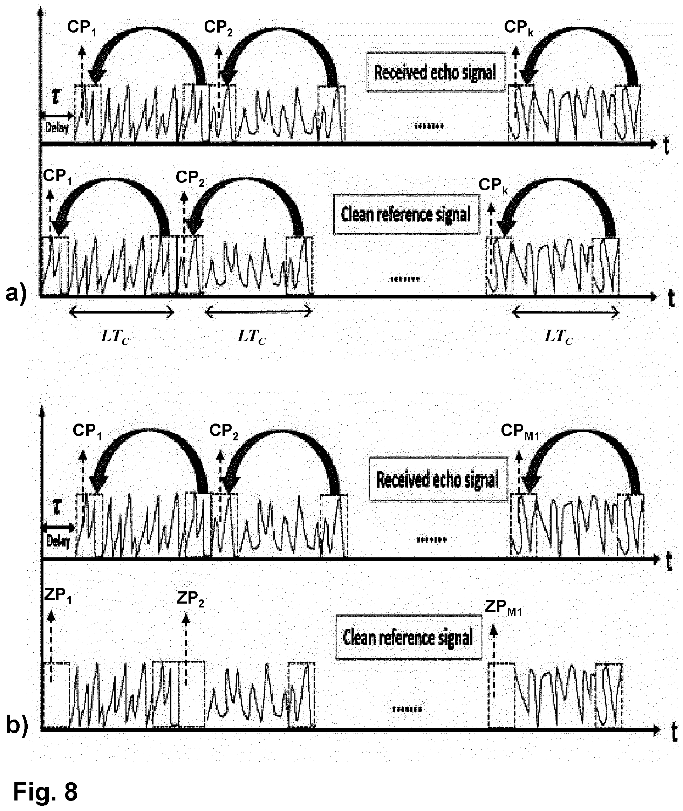

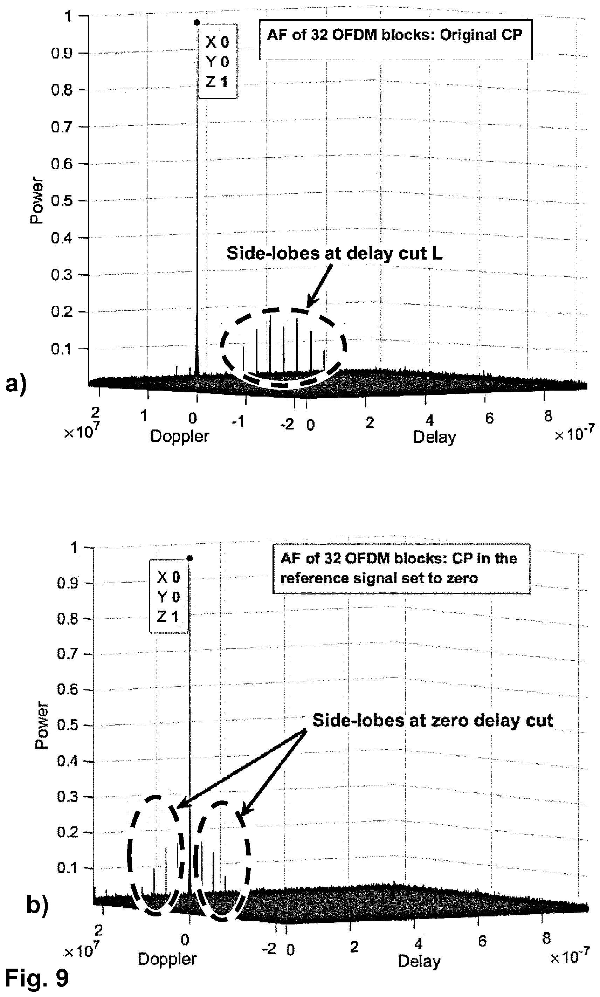

where $y_c(p)$, $p = 1,2, ..., N_d$ corresponds to the clean block-OFDM data samples which is used as the reference data signal. Two reference signals are available to choose from, depending on the choice of the cyclic prefix (CP), as shown in Figure 8.
In the first type of the reference data signal, shown in figure 8 a), the original CP is used, which is obtained from the transmit block-OFDM data samples. In the second type of the reference data signal, the CP samples in the reference data signal are set to zero, resulting in the reference data signal with zero prefix (ZP), as shown in figure 8 b).
The cyclic prefix samples in the block-OFDM transmission cause side-lobes in the data AF, $\mathbf{A}_{data}$ as shown in Figure 9. As seen in Figure 9, the locations of these sidelobes are different for the different choice of the reference data signal. When the original CP is used in the reference data signal for evaluation of the data AF, dominant sidelobes occur at the delay-cut $L$ because of the repetition of the CP symbols at the beginning and end of each OFDM block, or equivalently the CP symbols repeat once after $L$ block-OFDM samples for each block. When the ZP is used in the reference data signal for evaluation of the data AF, the dominant side-lobes occur at the zero-delay cut at uniform Doppler spacing of $\frac{5L}{4}$ Doppler bins. The reason for this uniform spacing in the Doppler domain is the periodicity of the ZP for every $\frac{5L}{4}$ block-OFDM samples over the entire reference data signal.

In accordance with the method according to the first aspect of the invention, the reference signal of the second type is used, with CP being set to zero. This choice of the data reference signal results in side-lobes at the zero-delay cut in the data AF, which will need to be suppressed or at least attenuated. This suppression or attenuation can advantageously be obtained by using the min-point selection algorithm.

It is well-known that the ideal AF is represented by a spike of infinitesimal width that peaks at the origin and is zero everywhere else. This represents a 2-D impulse function and has no ambiguities in delay or Doppler frequency. Due to maximum value and volume invariance properties of AF it has been mathematically proven that such ideal AF does not exist. Hence, every practical AF will have a non-ideal main-lobe and some undesirable sidelobes. The main-lobe of the AF is the lobe containing the highest power. The main-lobe width of the radar ambiguity function is a two-dimensional quantity denoted by $MLW(\Delta\tau, \Delta f)$ which captures the width of the mainlobe in the delay and Doppler axis of the AF. All the other lobes in the AF, other than the main-lobe are called sidelobes. The average power of the side-lobes, normalized by the main-lobe power is called the average side-lobe level and is denoted by $ASL$. Hence, for good radar sensing performance, the AF must have,

1) a small $MLW$ or equivalently a narrow main-lobe, and
2) low average side-lobe levels ($ASL$).

As the focus is on radar processing in the discrete domain, or digital domain, the ambiguity function of sequences is used. It is noted that the terms ambiguity function and delay-Doppler map may be used interchangeably in this specification.

The method in accordance with the first aspect of the present invention improves the quality of the IEEE 802.11ad frame AF by using both the deterministic preamble and the random block-OFDM data payload in the frame.

Let $x(p)$, $p = 0,1, ..., N_p$ - 1 be the preamble sequence which is transmitted over a single carrier and let $\mathbf{A}_{pre}(m, k)$ denote the ambiguity function of this preamble sequence, which can be obtained using equation 11. Similarly, let $y(p)$, $p = 0,1,2, ..., N_d$ - 1 be the set of time domain block-OFDM data samples obtained from the data payload and let $\mathbf{A}_{data}(m, k)$ denote the corresponding ambiguity function of these block-OFDM data samples, which can be obtained using equation 13.

In accordance with the method presented herein, a new AF is generated by performing point-wise minimum selection of the square of the absolute values of the preamble AF, $\mathbf{A}_{\mathrm{pre}}(m, k)$ and the data AF, $\mathbf{A}_{\mathrm{data}}(m, k)$ at each delay and Doppler bin. Hence:

$$\mathbf{A}_c(m, k) = \min\left\{\left|\mathbf{A}_{\mathrm{pre}}(m, k)\right|^2, \left|\mathbf{A}_{\mathrm{data}}(m, k)\right|^2\right\}$$

$$(\text{Eq. 14})$$

The entire signal processing can be summarized as:

- receive reflected communication frame and reference transmitted frame,
- pass the preamble part of the frame through the preamble matched filter and the data part of the frame through the data matched filter to obtain $A_{pre}(m, k)$ and $A_{data}(m, k)$ from equations 11 and 13,
- perform min-point selection for obtaining $\mathbf{A}_c(m, k)$ using equation 14, and
- output $\mathbf{A}_c(m, k)$

The AF output after the min-point selection, called the final AF, can now be used for radar sensing.

In the following section the performance improvement due to the min-point selection will be discussed. As mentioned further above, a good radar sensing output AF should have

1) a small $MLW$ or equivalently a narrow main-lobe, and
2) a low average sidelobe level.

The performance improvement will thus be examined over these measures.

The performance measure of the resolution is the main lobe width of the AF. Hence, in the following section the improvement in the narrowness of the $MLW$ due to the minpoint selection will be evaluated. Let the $MLW$ of the preamble AF ($\mathbf{A}_{\mathrm{pre}}(m, k)$) be $MLW_{pre}(\Delta\tau, \Delta f)$ and the $MLW$ of the data AF ($\mathbf{A}_{data}(m, k)$) be $MLW_{dat}(\Delta\tau, \Delta f)$. Then, the width of the main lobe of the final AF, $\mathbf{A}_c(m, k)$ generated by the min-point selection method is:

$$MLW_c(\Delta\tau) = \min\left\{MLW_{pre}(\Delta\tau), MLW_{data}(\Delta\tau)\right\}$$
$$MLW_c(\Delta f) = \min\left\{MLW_{pre}(\Delta f), MLW_{data}(\Delta f)\right\}$$

(Eqs. 15, 16)

In the Doppler domain, the data *MLW* is $MLW_{data}(\Delta f) = \dfrac{2B}{N_d}$, and the preamble *MLW* is

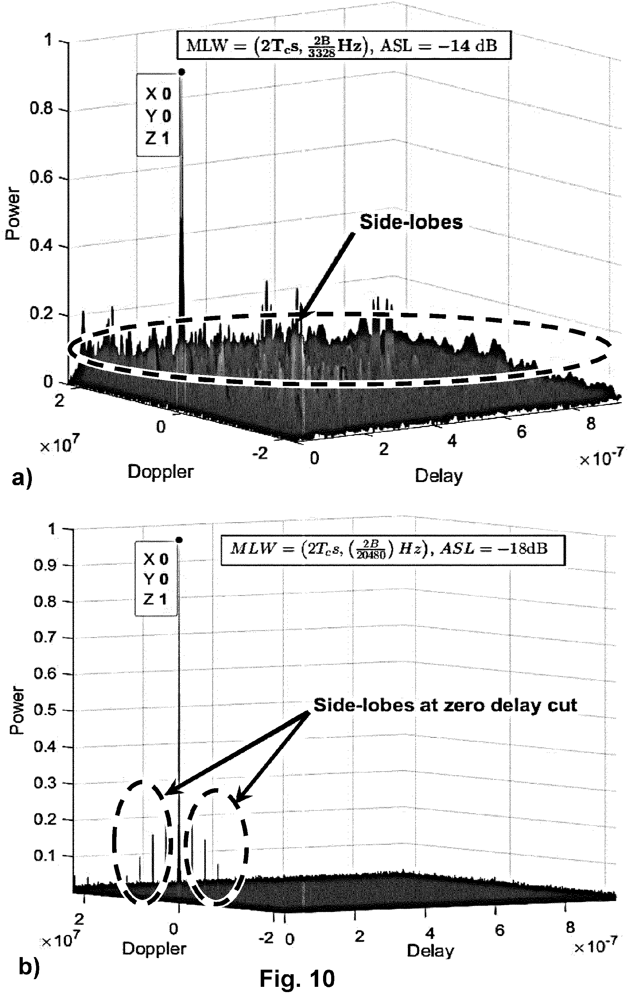

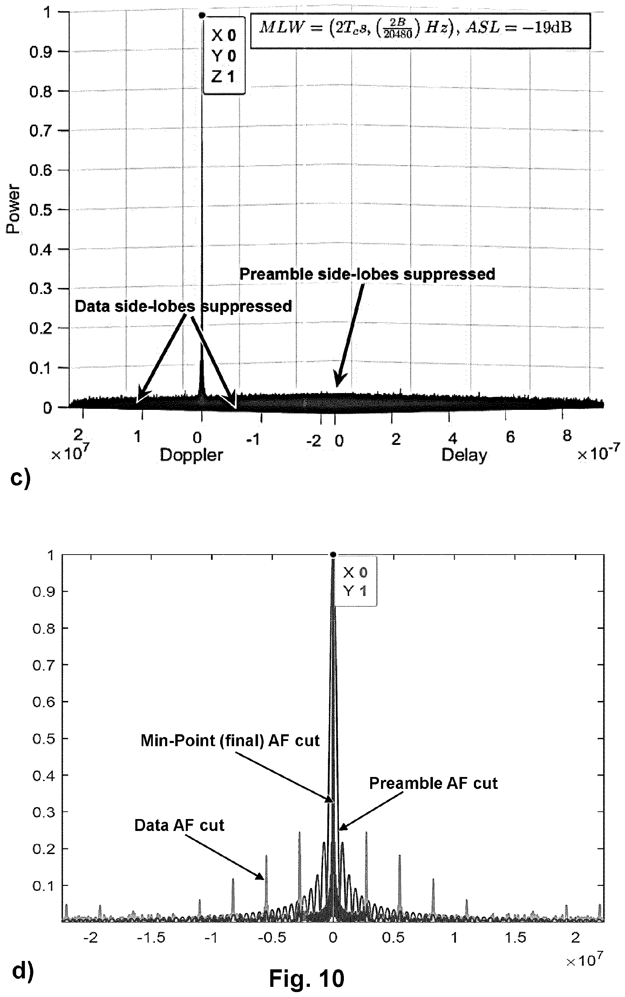

$MLW_{pre}(\Delta f) = \dfrac{2B}{N_p}$ . The length of the preamble sequence in the IEEE 802.11ad standard is $N_p$ = 3328 and the

maximum block-OFDM data samples that can be transmitted is $N_d$ = 262144. Hence, at best the final AF due to the min point selection has the Doppler *MLW*, $MLW_{data}(\Delta f) = \dfrac{2B}{262144}$ . Therefore, compared to the preamble AF, the best Doppler resolution of the final AF due to min-point selection is better by a factor of 78.77. Generally, the number of random block-OFDM data samples is greater than the length of the preamble sequences. Hence, the final AF due to the min-point selection algorithm has a better resolution than the preamble-based AF. Figure 10 shows the increase in the resolution due to the proposed min-point selection algorithm. Figure 10 a) shows the AF of the preamble, figure 10 b) shows the AF of the data payload with CP in the reference signal set to zero.

The second performance measure of the radar sensing performance is the average side lobe level. The $ASL_c$ of the final AF generated by the min-point selection scheme is the ratio of the average side-lobe power of the final AF to the main-lobe power. Now, the average side-lobe power of the final AF is always less than the average side-lobe power of either the preamble AF or the data AF because, for each delay-Doppler bin, the min-point processing algorithm selects the AF with the lowest power. The main-lobe power for the final AF generated by the min-point selection scheme is one since both the data AF and the preamble AF are normalized. Hence, $ASL_c$ of the final $AF_c$ due to min-point selection is always lower than the *ASL* of the data AF or the preamble AF. Figure 10 c) shows the combined final AF, with the data and preamble side-lobes suppressed through the point-wise min-point selection, resulting in the decrease in ASL, shown in figure 10 d).

For evaluating the radar target detection performance of the final $AF_c$ generated by min-point selection a simple thresholding-based detector is assumed. More sophisticated radar detectors such as the order statistic constant false alarm (OS-CFAR) detector and its variants can also be used. The target detection is performed on each delay-Doppler bin of the final AF($\mathbf{A}_c(m, k)$). It is noted that the noise in each of the delay-Doppler bins of the AF are i.i.d. Hence, for each of the delay-Doppler bins of the final $AF_c$ the decision on the presence or the absence of a target reduces to the following hypothesis testing problem:

$$H_0 : T = |\mathbf{A}_c(m, k)|^2 = \min\left\{|n_x(m, k)|^2, |n_X(m, k)|^2\right\}$$
$$H_1 : T = |\mathbf{A}_c(m, k)|^2 = \min\left\{|\hat{s}_x(m, k)|^2, |\hat{s}_X(m, k)|^2\right\}$$

(Eqs. 17 & 18)

where $n_x(m, k)$ is the output of the preamble matched filter with noise as the input, which is given by:

$$n_x(m, k) = \frac{1}{N_p}\sum_{l=1}^{N_p-m} n_x(l)s^*(l+m)e^{j2\pi\frac{kl}{N_p}}$$

(Eq. 19)

$n_X(m, k)$ is the output of the data matched filter with received echo as noise as the input, which is given by:

$$n_X(m, k) = \frac{1}{N_d} \sum_{p=1}^{N_d - m} n_X(p) S_c^*(p + m) e^{j2\pi \frac{kp}{N_d}}$$

(Eq. 20)

$\hat{s}_x(m, k)$ is the output of the preamble matched filter with the received signal containing the target, which is given by:

$$\hat{s}_x(m, k) = \frac{1}{N_p} \sum_{l=1}^{N_p - m} (s(l) + n_x(l)) s^*(l + m) e^{j2\pi \frac{kl}{N_p}}$$

(Eq. 21)

Similarly, $\hat{s}_X(m, k)$ is the output of the data matched filter in the presence of the target, which is given by:

$$\hat{s}_X(m, k) = \frac{1}{N_d} \sum_{p=1}^{N_d - m} (S(p) + n_X(p)) S_c^*(p + m) e^{j2\pi \frac{kp}{N_d}}$$

(Eq. 22)

Hence, the expression of the threshold $\eta$ that maximizes the probability of correct detection ($P_D$) for a given probability of false alarm ($P_{FA}$) can be derived as

$$P_{FA} = \mathbb{P}\{T > \eta; H_0\} = \exp\left(-\eta/\sigma^2\right)$$

(Eq. 23)

$$P_D = \mathbb{P}\{T > \eta; H_1\} = \left(Q_1\left(\sqrt{|\mathbf{A}_c(m, k)|^2/\sigma^2}, \sqrt{\eta/\sigma^2}\right)\right)^2$$

(Eq. 24)

where $Q_1(.)$ is the Marcum Q-function.

Proof: It is observed that $n_x(m, k)$ and $n_X(m, k)$ are i.i.d Gaussian random variables with zero mean and variance $\sigma^2$. Hence, the output of the min-point AF $\mathbf{A}_c(m, k)$ under the hypothesis $H_0$ is the minima of i.i.d central $\chi^2$ random variables with two degrees of freedom, i.e., $\chi_2^2$. Similarly, it is observed that $s_x(m, k)$ and $s_X(m, k)$ are i.i.d Gaussian random variables with means $\mathbf{A}_{pre}(m, k)$ and $\mathbf{A}_{data}(m, k)$ respectively and variance $\sigma^2$.

Hence, the output of the min-point selection algorithm $\mathbf{A}_c(m, k)$, under the hypothesis $H_1$ is a minima of i.i.d non-central $\chi_2^2$ random variables with non-centrality parameter $\lambda = |\mathbf{A}_c(m, k)|^2$.

Hence, the cdf of $T = \mathbf{A}_c(m, k)$ under $H_0$, which is a minimum of two i.i.d $\chi_2^2$ random variables is given by:

$$F_T(t) = 1 - \left(e^{-t/2}\right)^2 = 1 - e^{-t}$$

(Eq. 25)

Similarly, the cdf of $T = \mathbf{A}_c(m, k)$ under $H_1$, which is a minimum of two non-central i.i.d $\chi_2^2(\mathbf{A}_c(m, k))$ random variables is given by:

$$F_T(t) = 1 - \left( Q_1\big(|\mathbf{A}_c(m, k)|, \sqrt{t}\big) \right)^2$$

(Eq. 26)

Hence, the expressions for the probability of the probability of false alarm, $P_{FA}$ and the probability of detection, $P_D$ for a given threshold $\eta$ are given by:

$$P_{FA} = \mathbb{P}\{T > \eta; H_0\} = \exp\left(-\eta/\sigma^2\right)$$
$$P_D = \mathbb{P}\{T > \eta; H_1\} = \left( Q_1\left( \sqrt{|\mathbf{A}_c(m, k)|^2/\sigma^2}, \sqrt{\eta/\sigma^2}\right)\right)^2$$

(Eqs. 27 & 28)

In the following section numerical simulations are provided for evaluating and verifying the performance of the method presented herein.

The first simulation set-up consists of the transmission of an IEEE 802.11ad frame comprising a preamble sequence of length $N_p$ = 3328 and random blockOFDM data samples of length- $N_d$ = 20480. The single-carrier symbol duration is $T_c$ = 1/B = (1/1.760)ns = 0.56818ns. The OFDM symbol duration specified in the standard is 0.194$\mu$s = 512 * ½. 640$ns$. However, in the simulations the OFDM symbol duration is set to 512 * 1/1.760 = 0.291$\mu$s for a fair comparison with the preamble-only based radar sensing scheme suggested by P. Kumari, J. Choi, N. González-Prelcic, and R. W. Heath, in "IEEE 802.11ad-based radar: An approach to joint vehicular communication-radar system," IEEE Transactions on Vehicular Technology, vol. 67, no. 4, pp. 3012-3027, 2018.

First, the performance of the min-point selection algorithm is evaluated for the received echo consisting of a single target at (0 ns, 0MHz). At the receiver, the target is recovered in accordance with the method presented herein. The performance of the ambiguity function due to the min-point selection for obtaining a final AF is shown in figure 10. From the Figure, the following observations can be made:

1) The MLW of the final AF is better than the preamble AF by a factor of 6

2) The ASL of the final AF is better than the ASL of the preamble AF by 5 dB as well as the ASL of the data AF by 1 dB

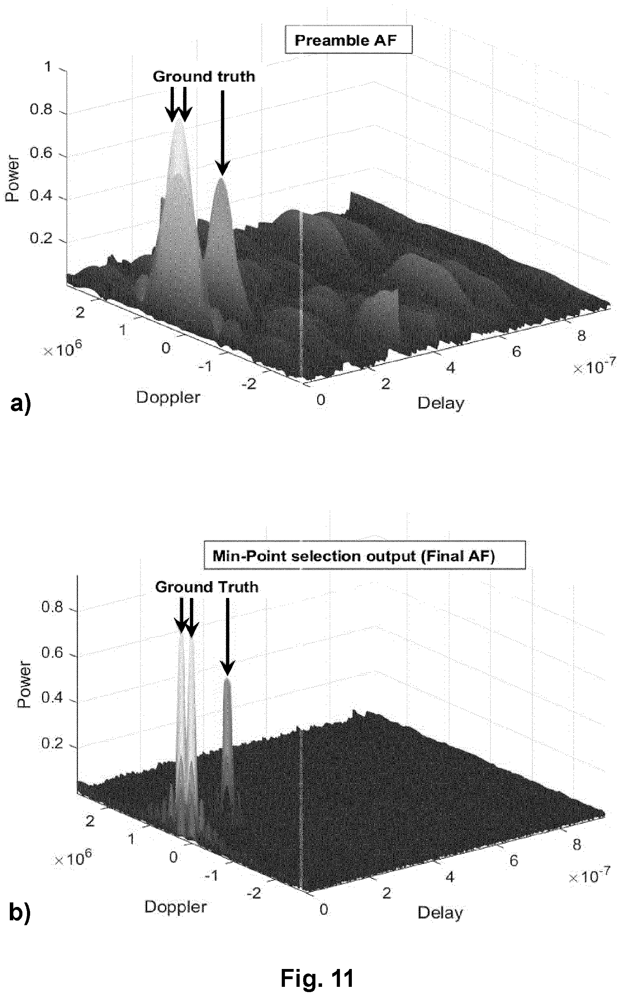

Second, the performance of the min-point selection algorithm is evaluated for a multi-target scenario. In the simulation set-up, the received signal consists of three echoes of the communication signal whose $\tau$, $f$ values relative to the transmitter are 113.6 ns, 0 MHz, 0 ns, 0.2479 MHz and 0 ns, 0 MHz respectively. At the receiver, the estimates of the delay and Doppler for the three targets are obtained by using the method presented herein. Again, the transmission consists of the IEEE 802.11ad frame comprising a preamble sequence of length $N_p$ = 3328 and random blockOFDM data samples of length- $N_d$ = 20480. The results for recovering three targets are shown in figure 11. Figure 11 shows the amplitudes of a preamble-only AF and a min-point selection output AF over a "Delay" and a "Doppler" value. As a performance measure of the resolution, the main-lobe width of the ambiguity function is considered, i.e., an improvement in the narrowness of the MLW due to the min-point selection algorithm is evaluated. A further performance measure of the radar sensing performance may be the height of the peak side-lobe level (PSL). The peak side-lobe level is measured with respect to the main-lobe. Yet another performance measure of the radar sensing performance, particularly of the resolution may be the ratio of the distance of the PSL to the main-lobe width as this ratio shows if the side-lobe interferes with the main-lobe and hence affects the detection performance of the target. This quantity does not have a closed form expression. From figure 11 it can be concluded that the side-lobe does not interfere significantly in the case of the min-point selection output (final AF).

In figure 11 a) the resolution of a preamble-only AF is shown. The main lobe has a wide width, and the ASL is -13.47 dB, consequently the preamble-only AF identifies only two targets out of the three, due to its low resolution. In figure 11 b) the resolution of the AF combined in accordance with the present invention is shown. The main lobe has a narrow width, the side-lobes are lower, and the ASL is -16.41 dB. Consequently, all three targets are identified as individual targets. From the figure, the following observations can be made:

1) The preamble AF is unable to resolve the two targets separated in Doppler domain. This is due to the wide MLW of the preamble AF in the Doppler domain, which leads to the merging of the targets

2) The data AF and the final AF due to the min-point selection are able to resolve all the three targets

3) The ASL of the final AF is lower than the ASL of the data AF by 1.2 dB

The benefit of better Doppler resolution obtained by the method discussed herein compared to using only the IEEE 802.11ad preamble sequence for radar sensing is readily apparent from figure 11.

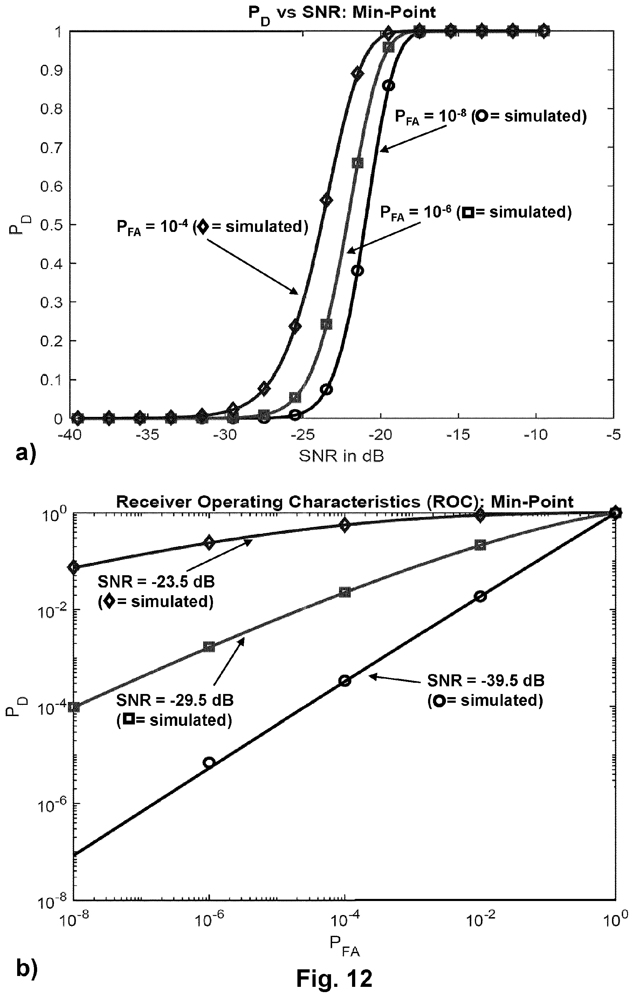

In the following section the influence of the min-point selection on the detection performance will be evaluated. The simulation set-up consists of receiving one target echo at 28.409 ns, 0 MHz. Monte-Carlo simulations with 1000000 noise realizations were performed. For a fixed $P_{FA}$ and SNR, the threshold for deciding the target was set using equation 23. The decision for the presence of the target was made if the received signal power was greater than the threshold. The $P_D$ was then evaluated based on the number of correct detections for different values of SNR and different values of $P_{FA}$. The transmission consists of the IEEE 802.11ad frame with a preamble sequence of length $N_p$ = 3328 . However, the block-OFDM data size was set at $N_d$ = 5120. The results of the detection performance are shown in Figures 12 a) and 12 b), which show the $P_D$ as a function of SNR and the receiver operating characteristics (ROC), respectively. From the figure it can be observed that the simulated performance closely matches the theoretical results generated from equations 23 and 24.

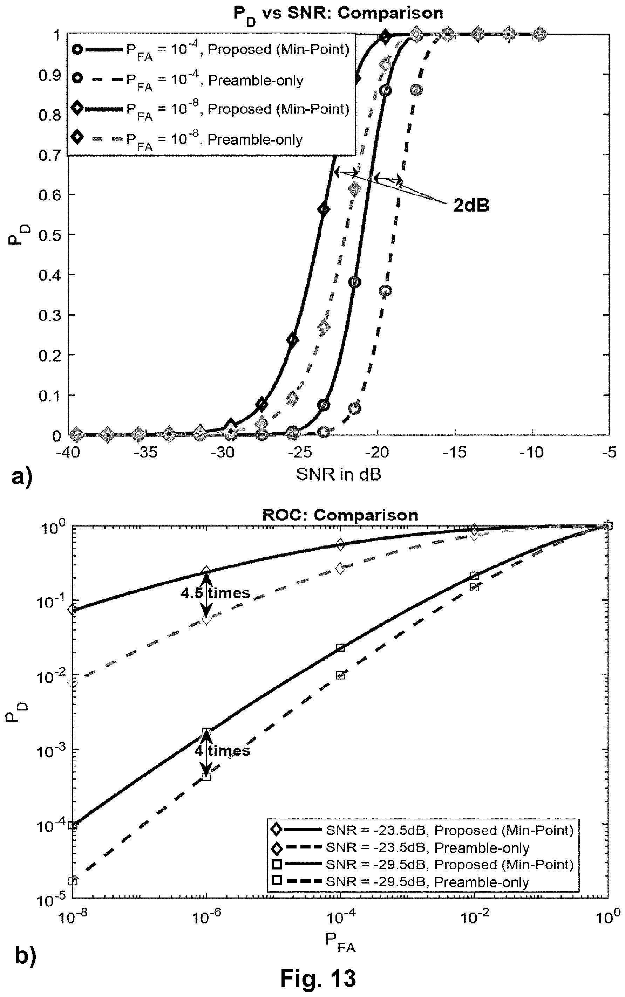

To put the results in perspective with the prior art, figure 13 a) and 13 b) show the detection performance of the radar sensing based on preamble-only AF used for comparison further above in comparison with the detection performance of the final AF in accordance with the method presented herein. The curves for the preamble-only AF are shown in dashed lines, whereas the curves for the combined AF are shown in solid lines.

The simulation set-up consists of receiving one target echo at 28.409 ns, 0 MHz. For a fair comparison, it is ensured that the energy of the transmitted signal is equal in both the proposed set-up as well as the set-up used for comparison. Monte-Carlo simulations with 1000000 noise realizations were performed. For a fixed $P_{FA}$ and SNR, the threshold for deciding the target was set using equation 23. The decision for the presence of the target was made if the received signal power was greater than the threshold. The $P_D$ was then evaluated based on the number of correct detections for different values of SNR and different values of $P_{FA}$. The transmission consists of the IEEE 802.11ad frame comprising a preamble sequence of length $N_p$=3328 and the block-OFDM data size was set at $N_d$=5120. For the prior art preamble-only based radar sensing, only the preamble part of the frame was used for evaluating the AF and the threshold for deciding the target was set according to equation 21 presented in the prior art paper. The results of the detection performance are shown in Figures 13 a) and 13 b). From the figure, the following observations can be made:

1) From Figure 13 a), for a particular $P_{FA}$, is can be observed that the detection curves due to the final AF, i.e., after min-point selection, are to the left of the detection curves obtained by the preamble-only AF by about 2 dB SNR for the range of $P_D$ between 0.1 to 0.9. This implies a better detection performance of the method presented herein as compared to the preamble-only based radar sensing. This is due to the fact that min-point selection provides a better noise suppression which leads to a lower ASL as pointed out in the discussion of figure 10.

2) In figure 13 b), for a particular SNR, it can be observed that the ROC curves obtained by the final AF, i.e., after min-point selection, are above the ROC curves obtained by the preamble-only AF by about 4.5 times for the commonly used operating $P_{FA}$ of $10^{-6}$. This implies a better detection performance of the inventive method presented herein.

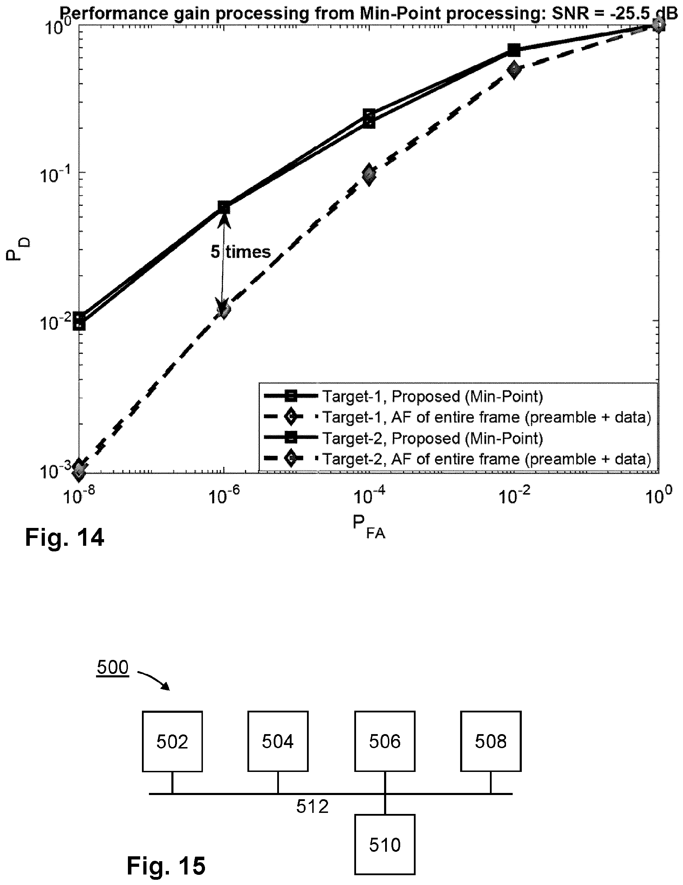

Next, the multi-target detection performance of the inventive method is evaluated using the ROC. The simulation set-up consists of three echoes of the communication signal whose $\tau, f$ values relative to the transmitter are 56.818 ns, 0 MHz, 28.409 ns, 4.3 MHz and 28.409 ns, 0 MHz, respectively. MonteCarlo simulations with 1000000 noise realizations were performed. For a fixed $P_{FA}$ and SNR, the threshold for deciding the target was set using equation 23. The decision for the presence of the target was made if the received signal power was greater than the threshold. The $P_D$ was then evaluated based on the number of correct detections for different values of $P_{FA}$. The transmission consists of the IEEE 802.11ad frame having a preamble sequence of length $N_p$ = 3328 and the block-OFDM data size was set at $N_d$ = 5120. In this simulation, both the preamble and the data parts of the IEEE 802.11ad frame were used for radar sensing, and the detection performance is compared with and without min-point selection, respectively, in Figure 14. From the figure, the following observations can be made:

1) the ROC curves for both targets obtained by the final AF output by the min-point selection are above the ROC curves obtained by the AF of the complete frame without min-point selection. This implies a better detection performance due to the min-point selection, about 5 times for the commonly used operating $P_{FA}$ of $10^{-6}$.

2) the complexity for evaluating the AF for the long data frame is higher than evaluating the AF separately for the preamble and data parts of the frame and combining them using min-point selection.

It can be concluded that the min-point selection enables a better Doppler resolution because of its ability to select the best among the preamble AF and the data AF. It also uses the fact that the block-OFDM data payload is generally longer than the preamble to achieve better Doppler resolution. It can further be concluded that the min-point selection provides better detection performance due to its ability to provide better noise suppression and lower ASL.

The method disclosed hereinbefore is a novel method of using communication signals for radar sensing. The method can advantageously be used within the IEEE 802.11ad mm-Wave communication physical layer (PHY) frame, wherein the echoes of both the deterministic preamble part and the random, from the radar sensing point of view, user payload are leveraged in order to improve the overall radar sensing. However, other communication protocols using transmission frames having a preamble and data blocks separated by cyclic prefixes may be used, in particular next-generation wireless systems such as 6G and the like, where joint sensing and communications are considered as an important enabling technology for vehicular use cases.

The radar sensing performance improvement is observed in terms of the Doppler resolution and the average side-lobe level (ASL). The improvement in the Doppler resolution results from the long data sequence. The improvement in the ASL is achieved because the min-point selection reduces the noise side-lobes. The achieved improvement brings about an improvement in the probability of detection.

Exploiting the existing vehicle-to-vehicle (V2V) communications protocols to utilize them as automotive radar waveforms is an effective radar sensing strategy. Using these strategies, the radar sensing is improved without significantly compromising the communication functionalities.

Brief Description of the Drawings

In the following section the invention will be described with reference to the drawing, in which

Fig. 1      shows a prior art system of separate communication and sensing,
Fig. 2      shows a general schematic system using joint communication and sensing,
Fig. 3      schematically shows a vehicle according to an embodiment,
Fig. 4      schematically shows a communication system according to an embodiment,
Fig. 5      schematically shows a communication system according to a further embodiment,
Fig. 6      schematically a section of an IEEE 802.11ad transmission frame,
Fig. 7      schematically a method for applying a combined ambiguity function to the IEEE 802.11ad protocol,
Fig. 8      shows two variants of reference data signals for determining the data radar ambiguity function,
Fig. 9      the side lobes caused in the radar ambiguity function by the two variants of reference data signals,
Fig. 10    shows the increase in the resolution due to the proposed min-point selection algorithm,
Fig. 11    shows a comparison of the resolution of preamble-only AF and a combined AF in accordance with the present invention,
Fig. 12    shows a simulation of the detection performance at different SNR,
Fig. 13    shows a comparison of the detection performance at different SNR with a preamble-only AF,
Fig. 14    shows a comparison of the performance of an AF for the preamble and data with and without min-point selection,
Fig. 15    shows an exemplary block diagram of a receiver in accordance with the second aspect of the present invention,
Fig. 16    shows a flow diagram according to an embodiment.

In the figures, identical or similar elements may be referenced using the same reference symbol.

Detailed Description of Embodiments

Figures 1, 2 and 8 to 14 have been described further above and will not be discussed in detail again.

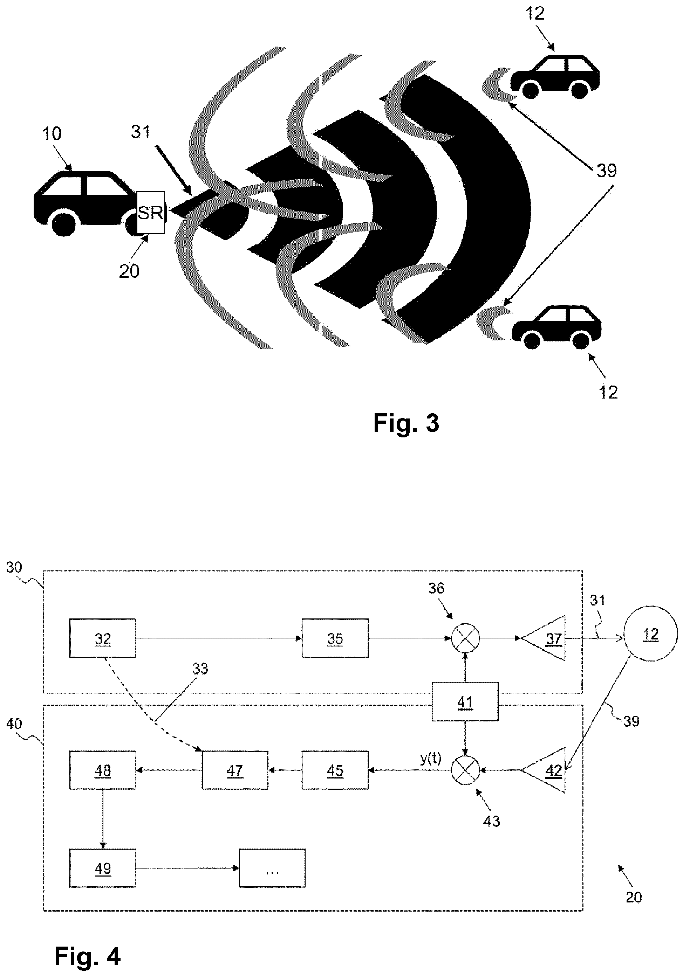

Figure 3 schematically shows a vehicle 10 according to an embodiment of the present invention. The vehicle 10 comprises a communication system 20 comprising a box "SR" with a sender or transmitter 30 (see below) and a receiver 40. The transmitter 30 of the communication system 20 may send a sent communication signal 31. The sent communication signal 31 is reflected by two objects 12, depicted as vehicles. A reflected communication signal 39 is received and evaluated by the receiver 40 of the communication system 20.

Figure 4 shows schematically a communication system 20 according to an embodiment. The communication system 20 comprises a sender or transmitter 30 and a receiver 40. The transmitter 30 comprises a protocol machine 32, which may output a bit-sequence according to the protocol used in the communication system 20. Radio frequency (RF) related component 35 may perform tasks like pulse shaping the output of protocol machine 32. A first mixer 36 may mix the output of RF related component 35 with a high-frequency oscillator 41, resulting in a frequency within a radar frequency range. The radar frequency range may be a range well above 30 MHz, e.g., between 30 GHz and 300 GHz, particularly between 50 and 150 GHz, for instance between 57 GHz and 71 GHz or between 76 GHz and 78. The transmitter 30 may send, via output stage 37, a sent communication signal 31.

The output stage 37 may comprise an antenna, e.g., a horn antenna, and/or a MIMO antenna. The output stage 37 may use Orthogonal Frequency-Division Multiplexing (OFDM) signal waveforms. The sent communication signal 31 is reflected by at least one object 12. Thus, a reflected communication signal 39 is the sent communication signal 31 that is reflected by at least one object.

The reflected communication signal 39 may be received by an input stage 42 of the receiver 40. The input stage 42 may comprise a low noise amplifier (LNA). A second mixer 43 may build an intermediate frequency (IF) signal y(t). In the example of figure 4, the second mixer 43 uses the same oscillator 41 signal as the transmitter 30; this variation may be useful, particularly in cases when the transmitter 30 and the receiver 40 are co-located, e.g., located in the same region of a car, in the same housing, and/or in the same component, e.g., board or chip. The resulting signal may be applied to a matched filter or a bank of correlators 47, e.g., by applying a method related to determining an ambiguity function. For determining the radar ambiguity function, the signal may be compared to the output of protocol machine 32, as depicted by a broken-line arrow 33. Due to this kind of comparing, the sent communication signal can be any kind of bit-sequence, i.e., no predefined bit-sequence is necessary to use the sent bit-sequence - i.e., a part of the sent communication signal 31 that is evaluated by the receiver 40 - for radar sensing. Of course, a predefined bit-sequence may also be part of the evaluated part of the sent communication signal 31. A min-point selection algorithm in component 48 may obtain a final or combined ambiguity function (AF) by taking point-wise minima of the AF at each delay and Doppler bin. Component 49 may evaluate the final AF, e.g., for delay and Doppler properties.

Figure 5 shows schematically a communication system 20 according to a further embodiment. Compared to figure 4, it shows determining separate ambiguity functions for the preamble part and the data payload of the reflected signal 39, and combining them, e.g., by selecting, in a min-point selection component 48, the minima among the two ambiguity functions, $\mathbf{A}_{pre}(m, k)$ and $\mathbf{A}_{data}(m, k)$. For this, the output y(t) of the mixer 43 is split, or filtered, and preamble and data payload symbols are passed separately through the matched filters 44 and 46, thus realizing Eq. 12 or Eq. 13, respectively. The outputs of these matched filters are then combined or fused and their point-wise minima taken, e.g., according to Eq. 14, for obtaining the final ambiguity function $\mathbf{A}_c(m, k)$. So, the min-point selection method is applied to the fused or combined waveform that comprises at least the reflected data payload and the reflected preamble part. As an alternative, the final ambiguity function may be obtained by taking point-wise minima of the absolute values of the two AFs - i.e., the outputs of both 46 and 47 - at each delay and Doppler bin. The final ambiguity function may be used for estimation of delay and Doppler of the targets buried in the received signal, and/or for further evaluation, as depicted by a "..."-box.

Figure 6 shows schematically a section of an IEEE 802.11ad transmission frame. The section shown comprises the IEEE 802.11ad PHY frame's preamble with the Short Training Field (STF) and the Channel Estimation Field (CEF). The STF contains 16 repeated and time-concatenated copies of a Golay code of length- 128, followed by another length128 tail-biting Golay sequence. The CEF consists of two length-512 Golay sequences followed by a length-128 tailbiting Golay sequence. The preamble part of the frame is followed data payload. OFDM data is transmitted in blocks, each headed by a cyclic prefix (CP), which contain a copy of an end part of the data block, indicated by the arrows pointing from the end of the blocks to the CP. The data blocks may comprise arbitrary bits.

For the radar function, the delay and Doppler values of the targets are estimated using the min-point selection algorithm. To this end, the preamble ambiguity function $\mathbf{A}_{pre}$ and the data ambiguity function $\mathbf{A}_{data}$ are determined separately, and are then combined by the point-wise minimum operation to obtain the combined AF, $\mathbf{A}_c$, as illustrated in figure 7. The modifications in an implementation of a radar receiver 40 for obtaining the delay and Doppler estimates from the combined AF are shown in figure 5.

Figure 15 shows an exemplary block diagram of a receiver in accordance with the second aspect of the present invention. The receiver 500 comprises a microprocessor 502, a volatile memory 504, a non-volatile memory 506, a communication interface 508 for communicating with a transmitter, and a signal receiver for 510 for receiving signals transmitted by the transmitter that are reflected off of objects. The aforementioned elements are communicatively connected via at least one data connection or bus 512. The non-volatile memory 506 stores computer program instructions which, when executed by the microprocessor 502, cause the receiver 500 to execute the method according to the first aspect of the present invention as presented above.

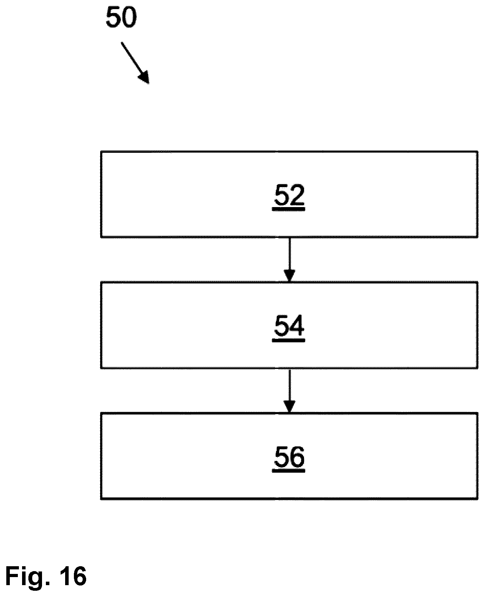

Figure 16 shows a flow diagram 50 according to an embodiment, depicting a method for a joint radar and wireless communication (JRC). In step 52, a reflected communication signal 39 is received. The receiving step may be performed by using an input stage of a receiver. The reflected communication signal 39 is a sent communication signal 31 that is reflected by at least one object 12. The frequency of the sent communication signal 31 may be within a radar frequency range. The sent communication signal 31 at least comprises a sent preamble and a sent data payload and the reflected communication signal 39 comprises at least comprises a corresponding reflected preamble and a reflected data payload.

In step 54, the reflected preamble and the reflected data payload of communication signal 39 are compared to the respective reference signals based on sent communication signal 31, resulting in respective compared communication signals. The comparing step may be performed, for instance, applying an ambiguity function, and/or using a matched filter or a bank of correlators. The compared communication signals are combined to a fused compared communication signal, using a min-point selection method. In step 56, a delay information and/or a velocity information of the at least one object 12 is extracted from the fused compared communication signal.

List of Reference Symbols

| | |
|---|---|
| 10 | vehicle |
| 12 | object(s) |
| 20 | communication system |
| 30 | transmitter |
| 31 | sent communication signal |
| 32 | protocol machine |
| 33, 34 | arrows |
| 35 | RF related component |
| 36 | first mixer |
| 37 | output stage |
| 39 | reflected communication signal |
| 40 | receiver |
| 41 | oscillator |
| 42 | input stage (comprising an LNA) |
| 43 | second mixer |
| 44 - 47 | component |
| 48 | min-point selection component |
| 49 | component |
| 50 | flow diagram |
| 52 - 56 | steps |
| 500 | receiver |
| 502 | microprocessor |
| 504 | volatile memory |
| 506 | non-volatile memory |
| 508 | communication interface |
| 510 | signal receiver |
| 512 | data connection or bus |

**Claims**

1. A method of processing wireless communication signals for use in radar sensing, comprising:

   - receiving a reflected communication signal (39), wherein the reflected communication signal (39) is a reflection of a sent communication signal (31) comprising a sent preamble part and a sent data payload, reflected off of at least one object (12), wherein the reflected communication signal (39) comprises a corresponding reflected preamble part and a reflected data payload,

   said method being **characterized by** further comprising:

   - determining a first radar ambiguity function for the reflected preamble part of the reflected communication signal (39),
   - determining a second radar ambiguity function for the reflected data payload of the reflected communication signal (39),
   - combining the first and the second radar ambiguity functions using a point-wise minimum selection, for obtaining a combined radar ambiguity function.

2. The method of claim 1, wherein the wireless communication signal is an orthogonal freuquency-division multiplexing, OFDM, transmission frame having a single-carrier preamble comprising a short training field, STF, and a channel estimation field, CEF, wherein the first radar ambiguity function for the reflected preamble part of the reflected communication signal is determined based on both the STF and the CEF of the single-carrier preamble.

3. The method of claim 1 or 2 wherein the wireless communication signal is an OFDM transmission frame having a plurality of OFDM data transmission blocks, each OFDM data transmission block having a cyclic prefix, CP, wherein, for determining the second radar ambiguity function for the reflected data payload of the reflected communication signal, the cyclic prefix of the reference signal is set to zero.

4. The method of any one of claims 1 to 3, wherein the squares of the respective absolute values of the first radar ambiguity function and the second radar ambiguity function are subjected to the point-wise minimum selection, for obtaining the combined radar ambiguity function.

5. The method of any one of the preceding claims, wherein determining the first radar ambiguity function for the reflected preamble part of the reflected communication signal (39) comprises setting the data payload in a delayed and Doppler-shifted copy of the sent communication signal (31) to zero, prior to comparing it with the reflected preamble part of the reflected communication signal (39).

6. The method of any one of the preceding claims, wherein determining the second radar ambiguity function for the reflected data payload of the reflected communication signal (39) comprises setting the preamble part in a delayed and Doppler-shifted copy of the sent communication signal (31) to zero, prior to comparing it with the reflected data payload of the reflected communication signal (39).

7. The method of any one of the preceding claims, wherein determining the first and/or the second radar ambiguity function comprises applying a matched filter or a bank of correlators.

8. The method of any one of the preceding claims, further comprising extracting a delay information and/or a velocity information of the at least one object (12) from the combined radar ambiguity function.

9. The method of any one of the preceding claims, wherein the frequency of the sent communication signal (31) is within a radar frequency range, including a frequency range between 30 GHz and 300 GHz, particularly between 50 and 150 GHz, for instance between 57 GHz and 71 GHz.

10. A computer program product comprising instructions, which, when the program is executed by a processor and/or a control unit of a communication system, cause the processor and/or the control unit to carry out a method of any one of the preceding claims.

11. A computer-readable storage medium where a computer program according to the preceding claim is stored on.

12. A receiver (40) for a joint radar and wireless communication, JRC, configured for performing a method of any one of the claims 1 to 9.

13. The receiver (40) of claim 12, wherein the receiver (40) is co-located to a transmitter (30) configured for sending the communication signal.

14. The receiver (40) of claim 12 or 13, wherein the receiver (40) comprises a low noise amplifier, LNA, and/or a mixer (43) configured for building an intermediate frequency, particularly the same oscillator (41) signal as the transmitter (30).

15. A communication system (20) comprising a receiver (40) according to any one of the claims 12 to 14 and a corresponding transmitter (30) configured for sending a communication signal.

16. A vehicle (10) comprising a receiver (40) according to any one of the claims 12 to 14 and/or a communication system (20) according to claim 15.

17. Use of a receiver (40) according to any one of the claims 12 to 14 and/or a communication system (20) according to claim 15 or of a method for both wireless communication and radar sensing according to any one of the claims 1 to 9.

**Patentansprüche**

1. Verfahren zur Verarbeitung von Drahtloskommunikationssignalen zur Verwendung bei der Radarerfassung, umfassend:

   - Empfangen eines reflektierten Kommunikationssignals (39), wobei das reflektierte Kommunikationssignal (39) eine Reflexion eines gesendeten Kommunikationssignals (31) ist, das einen gesendeten Präambelteil und einen gesendeten Nutzdatenteil umfasst, die von mindestens einem Objekt (12) reflektiert werden, wobei das reflektierte Kommunikationssignal (39) einen entsprechenden reflektierten Präambelteil und einen reflektierten Nutzdatenteil umfasst, wobei das Verfahren **dadurch gekennzeichnet ist, dass** es ferner Folgendes umfasst:

   - Bestimmen einer ersten Radarmehrdeutigkeitsfunktion für den reflektierten Präambelteil des reflektierten Kommunikationssignals (39),
   - Bestimmen einer zweiten Radarmehrdeutigkeitsfunktion für den reflektierten Nutzdatenteil des reflektierten Kommunikationssignals (39),
   - Kombinieren der ersten und der zweiten Radarmehrdeutigkeitsfunktion mithilfe einer punktweisen Minimalauswahl zum Erlangen einer kombinierten Radarmehrdeutigkeitsfunktion.

2. Verfahren nach Anspruch 1, wobei das Drahtloskommunikationssignal ein orthogonaler Frequenzmultiplex-(orthogonal frequency-division multiplexing, OFDM-)Übertragungsrahmen mit einer Einträger-Präambel ist, die ein kurzes Trainingsfeld (short training field, STF) und ein Kanalschätzungsfeld (channel estimation field, CEF) umfasst, wobei die erste Radarmehrdeutigkeitsfunktion für den reflektierten Präambelteil des reflektierten Kommunikationssignals auf der Grundlage sowohl des STF als auch des CEF der Einträger-Präambel bestimmt wird.

3. Verfahren nach Anspruch 1 oder 2, wobei das Drahtloskommunikationssignal ein OFDM-Übertragungsrahmen mit einer Vielzahl von OFDM-Datenübertragungsblöcken ist, wobei jeder OFDM-Datenübertragungsblock ein zyklisches Präfix (cyclic prefix, CP) aufweist, wobei zum Bestimmen der zweiten Radarmehrdeutigkeitsfunktion für den reflektierten Nutzdatenteil des reflektierten Kommunikationssignals das zyklische Präfix des Referenzsignals auf Null gesetzt wird.

4. Verfahren nach einem der Ansprüche 1 bis 3, wobei die Quadrate der jeweiligen Absolutwerte der ersten Radarmehrdeutigkeitsfunktion und der zweiten Radarmehrdeutigkeitsfunktion zum Erlangen der kombinierten Radarmehrdeutigkeitsfunktion der punktweisen Minimalauswahl unterzogen werden.

5. Verfahren nach einem der vorhergehenden Ansprüche, wobei Bestimmen der ersten Radarmehrdeutigkeitsfunktion für den reflektierten Präambelteil des reflektierten Kommunikationssignals (39) Auf-Null-Setzen des Nutzdatenteils in einer verzögerten und doppler-verschobenen Kopie des gesendeten Kommunikationssignals (31) umfasst, bevor sie mit dem reflektierten Präambelteil des reflektierten Kommunikationssignals (39) verglichen wird.

6. Verfahren nach einem der vorhergehenden Ansprüche, wobei Bestimmen der zweiten Radarmehrdeutigkeitsfunktion für den reflektierten Nutzdatenteil des reflektierten Kommunikationssignals (39) Auf-Null-Setzen des Präambelteils in einer verzögerten und Doppler-verschobenen Kopie des gesendeten Kommunikationssignals (31) umfasst, bevor sie mit dem reflektierten Nutzdatenteil des reflektierten Kommunikationssignals (39) verglichen wird.

7. Verfahren nach einem der vorhergehenden Ansprüche, wobei Bestimmen der ersten und/oder der zweiten Radarmehrdeutigkeitsfunktion Anwenden eines angepassten Filters oder einer Korrelatorbank umfasst.

8. Verfahren nach einem der vorhergehenden Ansprüche, ferner umfassend Extrahieren einer Verzögerungsinformation und/oder einer Geschwindigkeitsinformation des mindestens einen Objekts (12) aus der kombinierten Radarmehrdeutigkeitsfunktion.

9. Verfahren nach einem der vorhergehenden Ansprüche, wobei die Frequenz des gesendeten Kommunikationssignals (31) innerhalb eines Radarfrequenzbereichs ist, der einen Frequenzbereich zwischen 30 GHz und 300 GHz, insbesondere zwischen 50 und 150 GHz, beispielsweise zwischen 57 GHz und 71 GHz, einschließt.

10. Computerprogrammprodukt, das Anweisungen umfasst, die, wenn das Programm durch einen Prozessor und/oder eine Steuereinheit eines Kommunikationssystems ausgeführt wird, den Prozessor und/oder die Steuereinheit veranlassen, ein Verfahren nach einem der vorhergehenden Ansprüche durchzuführen.

11. Computerlesbares Speichermedium, auf dem ein Computerprogramm nach dem vorhergehenden Anspruch gespeichert ist.

12. Empfänger (40) für eine gemeinsame Radar- und Drahtloskommunikation (joint radar and wireless communication, JRC), konfiguriert zum Durchführen eines Verfahrens nach einem der Ansprüche 1 bis 9.

13. Empfänger (40) nach Anspruch 12, wobei der Empfänger (40) mit einem Transmitter (30) zusammen angeordnet ist, konfiguriert zum Senden des Kommunikationssignals.

14. Empfänger (40) nach Anspruch 12 oder 13, wobei der Empfänger (40) einen rauscharmen Verstärker (low noise amplifier, LNA) und/oder einen Mischer (43) umfasst, konfiguriert zum Aufbauen einer Zwischenfrequenz, insbesondere des gleichen Oszillatorsignals (41) wie der Transmitter (30).

15. Kommunikationssystem (20), umfassend einen Empfänger (40) nach einem der Ansprüche 12 bis 14 und einen entsprechenden Transmitter (30), konfiguriert zum Senden eines Kommunikationssignals.

16. Fahrzeug (10), umfassend einen Empfänger (40) nach einem der Ansprüche 12 bis 14 und/oder ein Kommunikationssystem (20) nach Anspruch 15.

17. Verwenden eines Empfängers (40) nach einem der Ansprüche 12 bis 14 und/oder eines Kommunikationssystems (20) nach Anspruch 15 oder eines Verfahrens sowohl zur Drahtloskommunikation als auch zur Radarerfassung nach einem der Ansprüche 1 bis 9.

**Revendications**

1. Procédé de traitement de signaux de communication sans fil destinés à être utilisés dans une détection radar, comprenant :

   - la réception d'un signal de communication réfléchi (39), dans lequel le signal de communication réfléchi (39) est une réflexion d'un signal de communication envoyé (31) comprenant une partie préambule envoyée et une charge utile de données envoyée, réfléchie sur au moins un objet (12), dans lequel le signal de communication réfléchi (39) comprend une partie préambule réfléchie correspondante et une charge utile de données réfléchie, ledit procédé étant **caractérisé en ce qu'**il comprend également :

      - la détermination d'une première fonction d'ambiguïté radar pour la partie de préambule réfléchie du signal de communication réfléchi (39),
      - la détermination d'une seconde fonction d'ambiguïté radar pour la charge utile de données réfléchie du signal de communication réfléchi (39),
      - la combinaison des première et seconde fonctions d'ambiguïté radar à l'aide d'une sélection minimale ponctuelle, pour obtenir une fonction d'ambiguïté radar combinée.

2. Procédé selon la revendication 1, dans lequel le signal de communication sans fil est une trame de transmission à multiplexage par répartition orthogonale de fréquence, OFDM, ayant un préambule à porteuse unique comprenant un champ d'apprentissage court, STF, et un champ d'estimation de canal, CEF, dans lequel la première fonction d'ambiguïté radar pour la partie de préambule réfléchie du signal de communication réfléchi est déterminée sur la base à la fois du STF et du CEF du préambule à porteuse unique.

3. Procédé selon la revendication 1 ou 2, dans lequel le signal de communication sans fil est une trame de transmission OFDM ayant une pluralité de blocs de transmission de données OFDM, chaque bloc de transmission de données OFDM ayant un préfixe cyclique, CP, dans lequel, pour déterminer la seconde fonction d'ambiguïté radar pour la charge utile de données réfléchie du signal de communication réfléchi, le préfixe cyclique du signal de référence est mis à zéro.

4. Procédé selon l'une quelconque des revendications 1 à 3, dans lequel les carrés des valeurs absolues respectives de la première fonction d'ambiguïté radar et de la seconde fonction d'ambiguïté radar sont soumis à la sélection minimale ponctuelle, pour obtenir la fonction d'ambiguïté radar combinée.

5. Procédé selon l'une quelconque des revendications précédentes, dans lequel la détermination de la première fonction d'ambiguïté radar pour la partie de préambule réfléchie du signal de communication réfléchi (39) comprend la mise à zéro de la charge utile de données dans une copie retardée et décalée Doppler du signal de communication envoyé (31), avant comparaison avec la partie de préambule réfléchie du signal de communication réfléchi (39).

6. Procédé selon l'une quelconque des revendications précédentes, dans lequel la détermination de la seconde fonction d'ambiguïté radar pour la charge utile de données réfléchie du signal de communication réfléchi (39) comprend la mise à zéro de la partie de préambule dans une copie retardée et décalée Doppler du signal de communication envoyé (31), avant comparaison avec la charge utile de données réfléchie du signal de communication réfléchi (39).

7. Procédé selon l'une quelconque des revendications précédentes, dans lequel la détermination de la première et/ou de la seconde fonction d'ambiguïté radar comprend l'application d'un filtre adapté ou d'un groupe de corrélateurs.

8. Procédé selon l'une quelconque des revendications précédentes, comprenant également l'extraction d'une information de retard et/ou d'une information de vitesse de l'au moins un objet (12) à partir de la fonction d'ambiguïté radar combinée.

9. Procédé selon l'une quelconque des revendications précédentes, dans lequel la fréquence du signal de communication envoyé (31) est comprise dans une plage de fréquences radar, comportant une plage de fréquences comprise entre 30 GHz et 300 GHz, en particulier entre 50 et 150 GHz, par exemple entre 57 GHz et 71 GHz.

10. Produit de programme informatique comprenant des instructions, qui, lorsque le programme est exécuté par un processeur et/ou une unité de commande d'un système de communication, amènent le processeur et/ou l'unité de commande à mettre en œuvre un procédé selon l'une quelconque des revendications précédentes.

11. Support de stockage lisible par ordinateur sur lequel un programme informatique selon la revendication précédente est stocké.

12. Récepteur (40) pour une communication mixte radar et sans fil, JRC, configuré pour mettre en œuvre un procédé selon l'une quelconque des revendications 1 à 9.

13. Récepteur (40) selon la revendication 12, dans lequel le récepteur (40) est co-localisé à un émetteur (30) configuré pour envoyer le signal de communication.

14. Récepteur (40) selon la revendication 12 ou 13, dans lequel le récepteur (40) comprend un amplificateur à faible bruit, LNA, et/ou un mélangeur (43) configuré pour construire une fréquence intermédiaire, en particulier le même signal d'oscillateur (41) que l'émetteur (30).

15. Système de communication (20) comprenant un récepteur (40) selon l'une quelconque des revendications 12 à 14 et un émetteur (30) correspondant configuré pour envoyer un signal de communication.

16. Véhicule (10) comprenant un récepteur (40) selon l'une quelconque des revendications 12 à 14 et/ou un système de communication (20) selon la revendication 15.

17. Utilisation d'un récepteur (40) selon l'une quelconque des revendications 12 à 14 et/ou d'un système de communication (20) selon la revendication 15 ou d'un procédé à la fois de communication sans fil et de détection radar selon l'une quelconque des revendications 1 à 9.

Fig. 1

Fig. 2

**Fig. 3**

**Fig. 4**

Fig. 5

Fig. 6

Fig. 7

Fig. 8

Fig. 9

a)

b)

Fig. 10

c)

d)

**Fig. 10**

Fig. 11

Fig. 12

Fig. 13

Fig. 14

Fig. 15

50

52

54

56

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Radio Resource Management in Joint Radar and Communication: A Comprehensive Survey. **LUONG NGUYEN GONG et al.** IEEE COMMUNICATIONS SURVEYS & TUTORIALS. IEEE, 01 April 2021, vol. 23, 780-814

- **P. KUMARI** ; **J. CHOI** ; **N. GONZÁLEZ-PRELCIC** ; **R. W. HEATH**. IEEE 802.11ad-based radar: An approach to joint vehicular communication-radar system. *IEEE Transactions on Vehicular Technology*, 2018, vol. 67 (4), 3012-3027